# EUROPEAN PATENT SPECIFICATION

(11) **EP 3 730 314 B1**
(45) Date of publication and mention of the grant of the patent: **18.08.2021**
(21) Application number: 20164945.6
(22) Date of filing: 23.03.2020
(51) Int. Cl.: B60C 9/04, B60C 9/06, B60C 9/22

(54) **TIRE FOR MOTORCYCLES AND TIRE SET FOR MOTORCYCLES**
REIFEN FÜR MOTORRÄDER UND REIFENSATZ FÜR MOTORRÄDER
PNEU POUR MOTOCYCLETTES ET JEU DE PNEUS POUR MOTOCYCLETTES

(30) Priority: 22.04.2019 JP 2019081190
(43) Date of publication of application: 28.10.2020
(73) Proprietor: Sumitomo Rubber Industries, Ltd., Kobe-shi, Hyogo-ken 651-0072 (JP)
(72) Inventor: ISAKA, Wataru, Kobe-shi,, Hyogo 651-0072 (JP)
(74) Representative: Manitz Finsterwald Patent- und Rechtsanwaltspartnerschaft mbB

(56) References cited:
- WO-A2-2011/001272
- JP-A- 2008 162 354
- JP-A- 2013 067 185
- JP-A- 2013 180 703

## Description

### [Technical Field]

The present invention relates to a tire for motorcycles and a tire set for motorcycles.

### [Background Art]

JP 2000-185511 A listed below has proposed a bias tire for motorcycles. The tire includes a carcass ply having a bias structure in which carcass cords are arranged at an angle of 30 to 45 degrees with respect to a tire circumferential direction. In addition, the tire includes a band arranged inside a tread portion and outside a carcass. The band includes an endless band ply in which band cords are spirally wound in the tire circumferential direction. In JP 2000-185511 A, improvement in steering stability by the carcass ply and the band is expected.

JP 2013-67185 A discloses a motorcycle tire according to the preamble of claim 1. Further motorcycle tires are disclosed, for example, in WO 2011/001272 A2, JP 2008-162354 A, and JP 2013-180703 A.

### [Summary of the invention]

### [Problems to be solved by the Invention]

Motorcycle tires having the above-described structure tend to impair ride comfort, and there has been a demand for improvements.

The present invention was made in view of the above, and a primary object thereof is to provide a tire for motorcycles and a tire set for motorcycles capable of exerting excellent steering stability while maintaining the ride comfort.

### [Means for Solving the Problems]

The present invention is a tire for motorcycles including a toroidal carcass and a band layer, wherein the carcass is formed by a plurality of carcass plies in which carcass cords are arranged in parallel, the carcass plies are overlapped so that the carcass cords cross each other, the carcass plies include at least one turned up ply which includes a main body portion extending between a tread portion and a bead core of a bead portion through a sidewall portion and a turned up portion connected with the main body portion and turned up around the bead core so as to extend outwardly in a tire radial direction, the carcass cords of the main body portion are arranged at an angle of 20 degrees or more and 70 degrees or less with respect to a tire equator, and the carcass cords of the turned up portion are arranged at an angle different from the carcass cords of the main body portion with respect to a tire circumferential direction, an angle difference between the carcass cords of the main body portion and the carcass cords of the turned up portion being 3 degrees or more and 15 degrees or less, and the band layer is arranged radially outside the carcass and inside the tread portion, and includes a jointless band ply in which band cords are spirally arranged at angles of 5 degrees or less with respect to the tire circumferential direction.

In the tire for motorcycles according to the present invention, it is preferred that the angle of the carcass cords of the turned up portion are larger than the angle of the carcass cords of the main body portion.

In the tire for motorcycles according to the present invention, it is preferred that the angle of the carcass cords of the turned up portion are smaller than the angle of the carcass cords of the main body portion.

In the tire for motorcycles according to the present invention, it is preferred that no other cord reinforcing layer is provided between an outer surface of the tread portion and the band layer.

In the tire for motorcycles according to the present invention, it is preferred that a thickness of a side thinnest portion which has the smallest tire thickness in the sidewall portion and the bead portion is smaller than a thickness of the tread portion at the tire equator.

In the tire for motorcycles according to the present invention, it is preferred that the thickness of the side thinnest portion is 0.70 times or less the thickness of the tread portion.

In the tire for motorcycles according to the present invention, it is preferred that a radially outer end of the turned up portion is positioned radially outside the side thinnest portion.

In the tire for motorcycles according to the present invention, it is preferred that a radially outer end of the turned up portion is positioned radially inside an outer end in a tire axial direction of the band layer.

The second aspect of the present invention is a tire set for motorcycles including the above-described tires as a tire for a front wheel and a tire for a rear wheel, wherein the angle of the carcass cords of the main body portion of the tire for a front wheel are smaller than the angle of the carcass cords of the main body portion of the tire for a rear wheel.

### [Effects of the Invention]

The tire for motorcycles of the present invention can sufficiently secure rigidity of the tire by the above-described carcass and band layer, therefore, it is possible that excellent steering stability is exerted. On the other hand, in the tires having high rigidity, the ride comfort tends to be impaired. However, in the tire of the present invention, since the carcass cords of the turned up portion are arranged at an angle different from the carcass cords of the main body portion with respect to the tire circumferential direction, the rigidity in the tire radial direction can be moderated in parts in which the angle of the carcass cords with respect to the tire circumferential direction are relatively small (the main body portion or the turned up portion), therefore, the ride comfort can be maintained consequently.

### [Brief Description of the Drawings]

[Figure 1] a cross-sectional view showing an embodiment of a tire for motorcycles according to the present invention.
[Figure 2] a development view of a carcass and a band layer of a tread portion of Fig. 1.
[Figure 3] a development view of a main body portion and a turned up portion of a turned up ply of Fig.1.
[Figure 4] an enlarged view of a sidewall portion and a bead portion of Fig. 1.

### [Mode for carrying out the invention]

An embodiment of the present invention will now be described in conjunction with accompanying drawings.

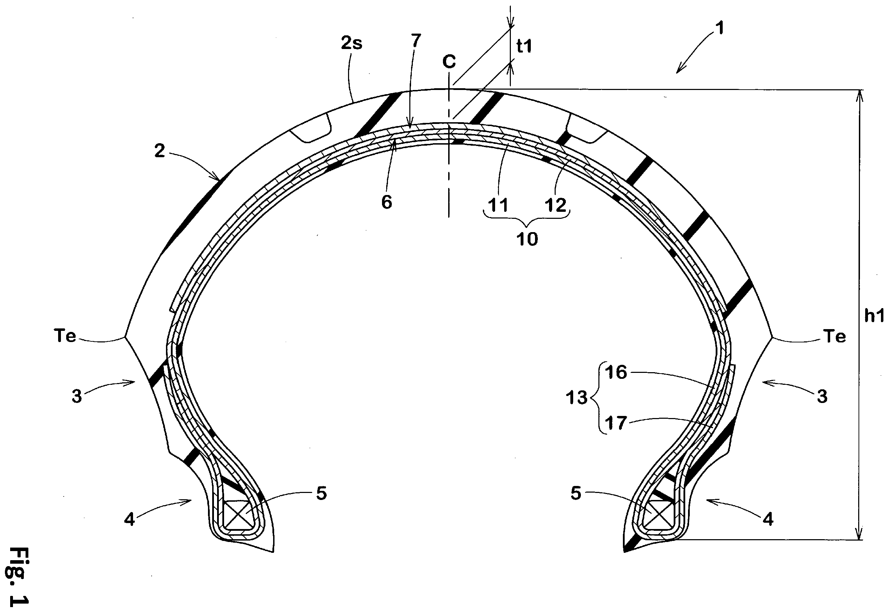

Figure 1 is a tire meridian section passing through a tire rotational axis of a tire for motorcycles (hereinafter, may be simply referred to as "tire") 1 according to the present embodiment in a standard state. The tire 1 of the present embodiment is a tire for a front wheel of a motorcycle suitable for on-road sports running.

The "standard state" is a state in which the tire 1 is mounted on a standard rim (not shown), inflated to a standard inner pressure, and loaded with no tyre load. In this specification, dimensions and the like of various parts of the tire are those measured under the standard state, unless otherwise noted.

The "standard rim" is a wheel rim specified for the concerned tire by a standard included in a standardization system on which the tire is based, for example, the "normal wheel rim" in JATMA, "Design Rim" in TRA, and "Measuring Rim" in ETRTO.

The "standard inner pressure" is air pressure specified for the concerned tire by a standard included in a standardization system on which the tire is based, for example, the "maximum air pressure" in JATMA, maximum value listed in the "TIRE LOAD LIMITS AT VARIOUS COLD INFLATION PRESSURES" table in TRA, and "INFLATION PRESSURE" in ETRTO.

As shown in Fig. 1, the tire 1 of the present embodiment has a tread portion 2. The tread portion 2 has an outer surface (2s), which is defined between a tread edge (Te) on one side and a tread edge (Te) on the other side, curved in an arc shape convex outward in a tire radial direction so that a sufficient ground contacting area can be obtained even when cornering with a large camber angle.

The tire 1 of the present embodiment includes a toroidal carcass 6 and a band layer 7.

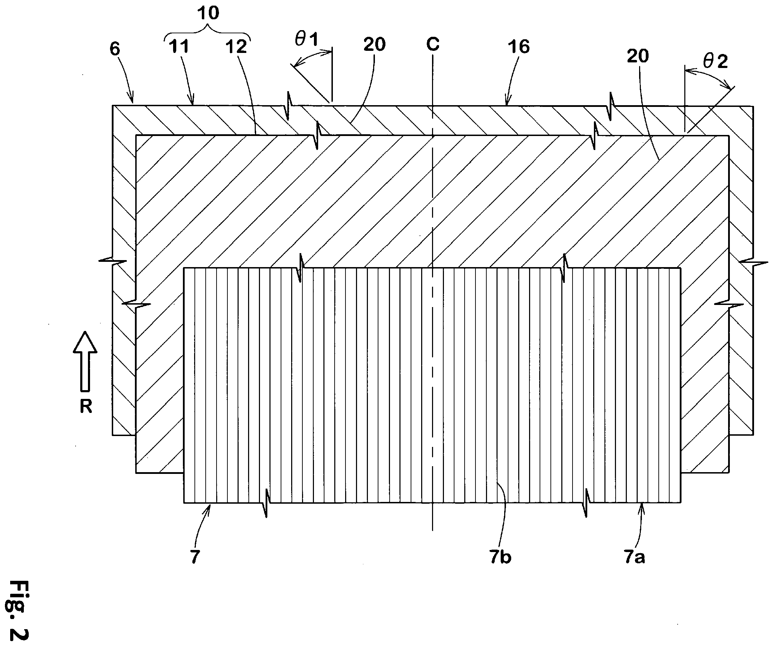

In Fig. 2, a development view of the carcass 6 and the band layer 7 in the tread portion 2 are shown. It should be noted that in Fig. 2, the vertical direction corresponds to the tire circumferential direction. As shown in Fig. 2, the carcass 6 are formed by a plurality of carcass plies 10 in which carcass cords 20 are arranged in parallel. The plurality of the carcass plies 10 are overlapped so that the carcass cords 20 cross each other. The carcass 6 of the present embodiment is formed by two carcass plies, that is a first carcass ply 11 and a second carcass ply 12, and the carcass cords 20 of the first carcass ply 11 are inclined in a direction opposite to the carcass cords 20 of the second carcass ply 12 with respect to the tire circumferential direction.

The band layer 7 is arranged radially outside the carcass 6 and inside the tread portion 2. The band layer 7 includes a jointless band ply (7a). In this jointless band ply (7a), band cords (7b) are spirally arranged at angles of 5 degrees or less with respect to the tire circumferential direction. The band layer 7 configured as such can effectively prevent the outer diameter from increasing when the tire rotates at a high speed, therefore, excellent high-speed stability and durability can be exerted.

As shown in Fig. 1, the carcass plies 10 include at least one turned up ply 13. In the present embodiment, both the first carcass ply 11 and the second carcass ply 12 are configured as a turned up ply 13. The turned up ply 13 is configured to include a main body portion 16 and turned up portions 17. The main body portion 16 extends between bead cores 5 of bead portions 4 via the tread portion 2 and sidewall portions 3. The turned up portions 17 are connected with the main body portion 16 and are each turned up around the respective bead core 5 so as to extend radially outwardly.

As shown in Fig. 2, the carcass cords 20 of the main body portion 16 are arranged at an angle of 20 degrees or more and 70 degrees or less with respect to a tire equator (c). In the present embodiment, an absolute value of an angle θ1 of each of the carcass cords 20 of the first carcass ply 11 with respect to the tire circumferential direction is the same as an absolute value of an angle θ2 of each of the carcass cords 20 of the second carcass ply 12 with respect to the tire circumferential direction. The angle θ1 and the angle θ2 are each preferably 30 degrees or more, more preferably 40 degrees or more, and preferably 60 degrees or less, more preferably 50 degrees or less.

As described above, the carcass 6 of the present embodiment has a so-called bias structure in which the carcass cords 20 are arranged at an angle with respect to the tire circumferential direction. In the carcass 6 having the bias structure, the carcass cords 20 have longer lengths between the bead core 5 on one side and the bead core 5 on the other side, therefore, binding force in the tire radial direction tends to be low. However, in the present invention, this disadvantage is compensated by the above-mentioned band layer. On the other hand, the tire provided with the band layer 7 has a small reaction force against torsional deformation of the ground contacting surface of the tread portion 2, and tends to have a small cornering force. whereas, in the tire of the present invention, large camber thrust is easily generated by the carcass 6 having the bias structure, therefore, the disadvantage of the band layer 7 is compensated. As described above, in the tire 1 of the present invention, the disadvantages of various components can be compensated by applying the band layer 7 to the carcass 6 having the bias structure.

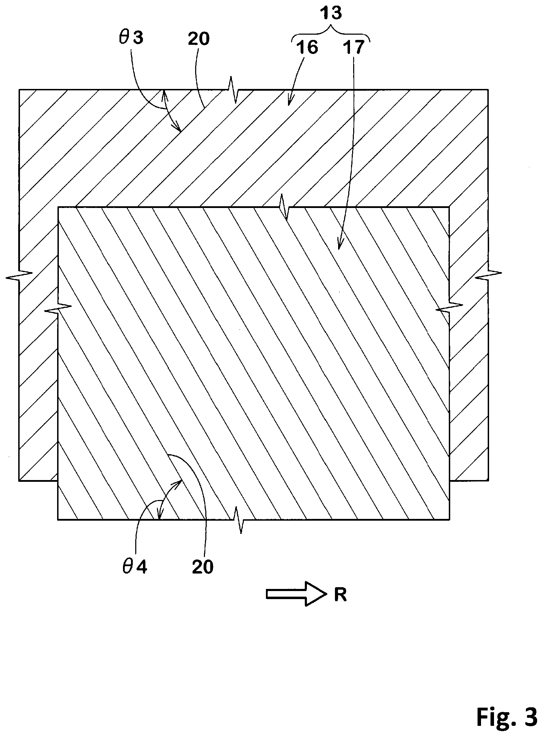

Figure 3 shows a development view of the main body portion 16 and the turned up portion 17 of the turned up ply 13 as viewed from the side of the sidewall portion 3. It should be noted that in Fig. 3, the lateral direction corresponds to the tire circumferential direction. As shown in Fig. 3, the carcass cords 20 of the turned up portion 17 are arranged at an angle different from the carcass cords of the main body portion 16 with respect to the tire circumferential direction.

The tire 1 of the present invention can sufficiently secure rigidity of the tire by the above-mentioned carcass 6 and band layer 7, therefore, it is possible that excellent steering stability is exerted. On the other hand, in the tires having high rigidity, the ride comfort tends to be impaired. However, in the tire 1 of the present invention, since the carcass cords 20 of the turned up portion 17 are arranged as described above, the rigidity in the tire radial direction can be moderated in parts in which the angle of the carcass cords 20 with respect to the tire circumferential direction are relatively small (the main body portion 16 or the turned up portion 17), therefore, the ride comfort can be maintained consequently.

In the present embodiment, an angle θ4 of the carcass cords of the turned up portion 17 with respect to the tire circumferential direction are larger than an angle θ3 of the carcass cords 20 of the main body portion 16 with respect to the tire circumferential direction. Thereby, a large camber thrust is secured, and cornering performance is improved.

The angle θ4 of the carcass cords 20 of the turned up portion 17 with respect to the tire circumferential direction may be smaller than the angle θ3 of the carcass cords 20 of the main body portion with respect to the tire circumferential direction.

The angle difference between the carcass cords of the main body portion 16 and the carcass cords of the turned up portion 17 is 3 degrees or more and 15 degrees or less and preferably 5 degrees or more and 10 degrees or less. Accordingly, the response of the steering when the camber angle is increased becomes linear while the above-described effect is exerted.

As shown in Fig. 1, it is preferred that no other cord reinforcing layer is provided between the outer surface (2s) of the tread portion 2 and the band layer 7. Thereby, the stress against the torsional deformation of the ground contacting surface is decreased, therefore, excellent straight running stability can be obtained.

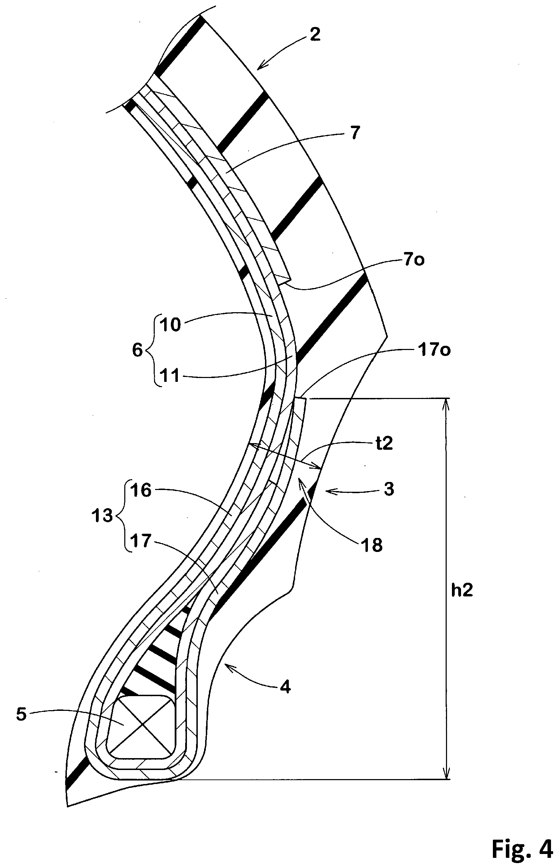

In Fig. 4, an enlarged view of the sidewall portion 3 and the bead portion 4 is shown. As shown in Fig. 4, it is preferred that a thickness (t2) of a side thinnest portion 18 having the smallest tire thickness in the sidewall portion 3 and the bead portion 4 is smaller than a thickness (t1) (shown in Fig. 1) of the tread portion 2 at the tire equator (C). Specifically, the thickness (t2) of the side thinnest portion 18 is 0.70 times or less the thickness (t1) of the tread portion 2. Thereby, flexibility of the sidewall portions 3 is ensured, therefore, the steering stability and the ride comfort are improved in a good balance.

From the point of view of appropriately reinforcing the sidewall portion 3, it is preferred that an outer end (17o) of the turned up portion 17 in the tire radial direction is positioned radially outside the side thinnest portion 18. Further, it is preferred that the outer end (17o) of the turned up portion 17 is positioned radially inside an axially outer end (7o) of the band layer 7.

From the same point of view, it is preferred that a turned up height (h2) between a bead baseline and the outer end (17o) of the turned up portion 17 is 0.30 times or more and 0.50 times or less a tire height (h1) (shown in Fig.1) between the bead base line and a radially outer end of the tread portion 2.

The second aspect of the present invention is a tire set for motorcycles including the above-described tire 1 as a tire for a front wheel and a tire for a rear wheel. In this tire set, it is preferred that the angle of the carcass cords 20 of the main body portion 16 of the tire for a front wheel with respect to the tire circumferential direction are smaller than the angle of the carcass cords 20 of the main body portion 16 of the tire for a rear wheel with respect to the tire circumferential direction. The angle difference between them is, for example, 3 degrees or more and 20 degrees or less, and more preferably 5 degrees or more and 10 degrees or less. Thereby, the cornering force of the front wheel becomes relatively small, therefore, excellent straight running stability can be obtained.

Detailed description has been made of the tire for motorcycles according to an embodiment of the present invention.

### [Working examples (Examples)]

Tires having the basic structure shown in Fig. 1, a nominal width of 120 mm, an aspect ratio of 70%, and a rim diameter of 17 inches were made by way of test based on the specifications shown in Table 1. Further, as References 1 to 3, tires in which the angle of the carcass cords of the main body portion with respect to the tire circumferential direction was the same as the angle of the carcass cords of the turned up portion with respect to the tire circumferential direction were made by way of test. It should be noted that the each of the tires in the References has substantially the same configuration as the tires in Examples except for the configuration described above. Each of the test tires was tested for the steering stability, the ride comfort, and steering lightness. Common specifications of the test tyres and the test methods were as follows.
Rim size: MT3.50
Tire inner pressure: 250 kPa
Test vehicle: displacement of 1000 cc

### < Steering stability >

While the above test vehicle was driven on an asphalt road surface of a curved road having a radius of curvature (R) of 400 meters at a speed of 220 km/h, reaction to disturbance was evaluated by the driver's feeling. The results are indicated by an evaluation point based on the Reference 1 being 100, wherein the larger the numerical value, the better the steering stability is.

### < Ride comfort >

when the above test vehicle was passing at a speed of 60 km/h through a bump having a height of 10 mm and a width of 30 mm, the magnitude of the impact and its convergence were evaluated by the driver's feeling. The results are indicated by an evaluation point based on the Reference 1 being 100, wherein the larger the numerical value, the better the ride comfort is.

### < Steering lightness >

While the above test vehicle was driven on an asphalt road surface of a winding mountain road, turn-in ability during cornering and easiness of leaning and steering were evaluated by the driver's feeling.

The results were indicated by an evaluation point based on the Reference 1 being 100, wherein the larger the numerical value, the better the steering lightness is.

The test results are shown in Table 1.

**Table 1 (1/2)**

| | | Ref.1 | Ref.2 | Ref.3 | Ex.1 | Ex.2 | Ex.3 | Ex.4 | Ex.5 |
|---|---|---|---|---|---|---|---|---|---|
| Angle θ3 of carcass cord of Main body portion | | 90 | 60 | 45 | 45 | 45 | 45 | 45 | 45 |
| Angle θ4 of carcass cord of Turned up portion | | 90 | 60 | 45 | 50 | 50 | 50 | 50 | 35 |
| Thickness (t2) of Side thinnest portion/ Thickness (t1) of Tread portion | | 1.05 | 0.70 | 0.70 | 0.70 | 1.05 | 0.58 | 0.87 | 0.70 |
| Steering stability [evaluation point] | | 100 | 104 | 105 | 106 | 110 | 104 | 108 | 105 |
| Ride comfort [evaluation point] | | 100 | 102 | 102 | 106 | 103 | 110 | 104 | 106 |
| Steering lightness [evaluation point] | | 100 | 104 | 104 | 106 | 104 | 110 | 106 | 106 |

| | Ex.6 | Ex.7 | Ex.8 | Ex.9 | Ex.10 | Ex.11 | Ex.12 | EX.13 | Ex.14 |
|---|---|---|---|---|---|---|---|---|---|
| Angle θ3 of carcass cord of Main body portion | 60 | 60 | 60 | 30 | 30 | 30 | 20 | 30 | 30 |
| Angle θ4 of carcass cord of Turned up portion | 65 | 65 | 65 | 38 | 38 | 38 | 30 | 38 | 38 |
| Thickness (t2) of Side thinnest portion/ Thickness (t1) of Tread portion | 0.70 | 0.58 | 0.87 | 0.70 | 0.58 | 0.87 | 0.70 | 0.58 | 0.87 |
| Steering stability [evaluation point] | 102 | 105 | 104 | 108 | 106 | 110 | 110 | 108 | 108 |
| Ride comfort [evaluation point] | 108 | 112 | 106 | 104 | 108 | 103 | 102 | 106 | 103 |
| Steering lightness [evaluation point] | 104 | 108 | 104 | 108 | 112 | 108 | 108 | 112 | 108 |

As shown in Table 1, the steering stability and the ride comfort were improved for the tires in each of the Examples compared with the tires in the Reference 1 (tires having a so-called radial structure). Further, when comparing the Examples and the References in which the angles of the carcass cords of the main body portions are common (for example, Examples 1 to 4 and Reference 3, Examples 6 to 8 and Reference 2), it was confirmed that the ride comfort was significantly improved. That is, it was confirmed that the tires for motorcycles in the Examples exerted excellent steering stability while maintaining the ride comfort. Furthermore, it was confirmed that the tires for motorcycles in the Examples also secured the steering lightness.

### [Description of Reference Signs]

- 2: tread portion
- 3: sidewall portion
- 4: bead portion
- 5: bead core
- 6: carcass
- 7: band layer
- 7a: jointless band ply
- 7b: band cord
- 10: carcass ply
- 13: turned up ply
- 16: main body portion
- 17: turned up portion
- 20: carcass cord

## Claims

1. A tire (1) for motorcycles comprising a toroidal carcass (6) and a band layer (7), wherein
the carcass (6) is formed by a plurality of carcass plies (10) in which carcass cords (20) are arranged in parallel,
the carcass plies (10) are overlapped so that the carcass cords (20) cross each other,
the carcass plies (10) include at least one turned up ply (13) which includes a main body portion (16) extending between a tread portion (2) and a bead core (5) of a bead portion (4) through a sidewall portion (3) and a turned up portion (17) connected with the main body portion (16) and turned up around the bead core (5) so as to extend outwardly in a tire radial direction,
the carcass cords (20) of the main body portion (16) are arranged at an angle of 20 degrees or more and 70 degrees or less with respect to a tire equator (c), and
the band layer (7) is arranged radially outside the carcass (6) and inside the tread portion (2), and includes a jointless band ply (7a) in which band cords (7b) are spirally arranged at angles of 5 degrees or less with respect to the tire circumferential direction,
**characterized in that** the carcass cords (20) of the turned up portion (17) are arranged at an angle different from the carcass cords (20) of the main body portion (16) with respect to a tire circumferential direction, an angle difference between the carcass cords (20) of the main body portion (16) and the carcass cords (20) of the turned up portion (17) being 3 degrees or more and 15 degrees or less.

2. The tire (1) for motorcycles according to claim 1, wherein
the angle of the carcass cords (20) of the turned up portion (17) are larger than the angle of the carcass cords (20) of the main body portion (16).

3. The tire (1) for motorcycles according to claim 1, wherein
the angle of the carcass cords (20) of the turned up portion (17) are smaller than the angle of the carcass cords (20) of the main body portion (16).

4. The tire (1) for motorcycles according to any one of claims 1 to 3, wherein
no other cord reinforcing layer is provided between an outer surface (2s) of the tread portion (2) and the band layer (7).

5. The tire (1) for motorcycles according to any one of claims 1 to 4, wherein
a thickness (t2) of a side thinnest portion (18) which has the smallest tire thickness in the sidewall portion (3) and the bead portion (4) is smaller than a thickness (t1) of the tread portion (2) at the tire equator (c).

6. The tire (1) for motorcycles according to claim 5, wherein
the thickness (t2) of the side thinnest portion (18) is 0.70 times or less the thickness (t1) of the tread portion (2).

7. The tire (1) for motorcycles according to claim 5 or 6, wherein
a radially outer end of the turned up portion (17) is positioned radially outside the side thinnest portion (18).

8. The tire (1) for motorcycles according to any one of claims 1 to 7, wherein
a radially outer end of the turned up portion (17) is positioned radially inside an outer end (7o) in a tire axial direction of the band layer (7).

9. A tire set for motorcycles including the tires (1) according to any one of claims 1 to 8 as a tire (1) for a front wheel and a tire (1) for a rear wheel, wherein
the angle of the carcass cords (20) of the main body portion (16) of the tire (1) for a front wheel are smaller than the angle of the carcass cords (20) of the main body portion (16) of the tire (1) for a rear wheel.

## Patentansprüche

1. Reifen (1) für Motorräder, der eine torusförmige Karkasse (6) und eine Bandschicht (7) umfasst, wobei
die Karkasse (6) durch eine Vielzahl von Karkasslagen (10) gebildet ist, in denen Karkasskorde (20) parallel angeordnet sind,
die Karkasslagen (10) so überlappt sind, dass sich die Karkasskorde (20) kreuzen,
die Karkasslagen (10) mindestens eine Umschlaglage (13) umfassen, die einen Hauptkörperabschnitt (16), der sich zwischen einem Laufflächenabschnitt (2) und einem Wulstkern (5) eines Wulstabschnitts (4) durch einen Seitenwandabschnitt (3) erstreckt, und einen Umschlagabschnitt (17) umfasst, der mit dem Hauptkörperabschnitt (16) verbunden ist und um den Wulstkern (5) umgeschlagen ist, so dass er sich in einer radialen Richtung des Reifens nach außen erstreckt,
die Karkasskorde (20) des Hauptkörperabschnitts (16) in einem Winkel von 20 Grad oder mehr und 70 Grad oder weniger in Bezug auf einen Reifenäquator (C) angeordnet sind, und
die Bandschicht (7) radial außen von der Karkasse (6) und innen von dem Laufflächenabschnitt (2) angeordnet ist und eine fugenlose Bandlage (7a) umfasst, in der Bandkorde (7b) spiralförmig in Winkeln von 5 Grad oder weniger in Bezug auf die Reifenumfangsrichtung angeordnet sind,
**dadurch gekennzeichnet, dass** die Karkasskorde (20) des Umschlagabschnitts (17) in Bezug auf eine Reifenumfangsrichtung in einem Winkel angeordnet sind, der sich von dem der Karkasskorde (20) des Hauptkörperabschnitts (16) unterscheidet, wobei eine Winkeldifferenz zwischen den Karkasskorden (20) des Hauptkörperabschnitts (16) und den Karkasskorden (20) des Umschlagabschnitts (17) 3 Grad oder mehr und 15 Grad oder weniger beträgt.

2. Reifen (1) für Motorräder nach Anspruch 1, wobei der Winkel der Karkasskorde (20) des Umschlagabschnitts (17) größer ist als der Winkel der Karkasskorde (20) des Hauptkörperabschnitts (16).

3. Reifen (1) für Motorräder nach Anspruch 1, wobei der Winkel der Karkasskorde (20) des Umschlagabschnitts (17) kleiner ist als der Winkel der Karkasskorde (20) des Hauptkörperabschnitts (16).

4. Reifen (1) für Motorräder nach einem der Ansprüche 1 bis 3, wobei zwischen einer Außenfläche (2s) des Laufflächenabschnitts (2) und der Bandschicht (7) keine weitere Kordverstärkungsschicht vorgesehen ist.

5. Reifen (1) für Motorräder nach einem der Ansprüche 1 bis 4, wobei eine Dicke (t2) eines dünnsten Seitenabschnitts (18), der die kleinste Reifendicke in dem Seitenwandabschnitt (3) und dem Wulstabschnitt (4) aufweist, kleiner ist als eine Dicke (t1) des Laufflächenabschnitts (2) am Reifenäquator (C).

6. Reifen (1) für Motorräder nach Anspruch 5, wobei die Dicke (t2) des dünnsten Seitenabschnitts (18) das 0,70-fache oder weniger der Dicke (t1) des Laufflächenbereichs (2) beträgt.

7. Reifen (1) für Motorräder nach Anspruch 5 oder 6, wobei ein radial äußeres Ende des Umschlagabschnitts (17) radial außen von dem dünnsten Seitenabschnitt (18) angeordnet ist.

8. Reifen (1) für Motorräder nach einem der Ansprüche 1 bis 7, wobei ein radial äußeres Ende des Umschlagabschnitts (17) radial innen von einem äußeren Ende (7o) in einer Reifenaxialrichtung der Bandschicht (7) angeordnet ist.

9. Reifensatz für Motorräder, der die Reifen (1) nach einem der Ansprüche 1 bis 8 als einen Reifen (1) für ein Vorderrad und einen Reifen (1) für ein Hinterrad enthält, wobei der Winkel der Karkasskorde (20) des Hauptkörperabschitts (16) des Reifens (1) für ein Vorderrad kleiner ist als der Winkel der Karkasskorde (20) des Hauptkörperabschnitts (16) des Reifens (1) für ein Hinterrad.

## Revendications

1. Pneumatique (1) pour motocyclettes comprenant une carcasse toroïdale (6) et une couche de bande (7), dans lequel
la carcasse (6) est formée par une pluralité de nappes (10) de carcasse dans lesquelles des câblés (20) de carcasse sont agencés en parallèle,
les nappes (10) de carcasse sont superposées de sorte que les câblés (20) de carcasse se croisent les uns les autres,
les nappes (10) de carcasse incluent au moins une nappe retroussée (13) qui inclut une portion formant corps principal (16) s'étendant entre une portion formant bande de roulement (2) et une âme de talon (5) d'une portion formant talon (4) à travers une portion formant paroi latérale (3) et une portion retroussée (17) connectée à la portion formant corps principal (16) et retroussée autour de l'âme de talon (5) de manière à s'étendre vers l'extérieur dans une direction radiale du pneumatique,
les câblés (20) de la portion formant corps principal (16) sont agencés sous un angle de 20 degrés ou plus et de 70 degrés ou moins par rapport à un équateur de pneumatique (C), et
la couche de bande (7) est agencée radialement à l'extérieur de la carcasse (6) et à l'intérieur de la portion formant bande de roulement (2), et inclut une nappe de bande sans joint (7a) dans laquelle des câblés de bande (7b) sont agencés en spirale sous des angles de 5 degrés ou moins par rapport à la direction circonférentielle du pneumatique,
**caractérisé en ce que** les câblés (20) de carcasse de la portion retroussée (17) sont agencés sous un angle différent des câblés (20) de carcasse de la portion formant corps principal (16) par rapport à une direction circonférentielle du pneumatique, un angle différent entre les câblés (20) de carcasse de la portion formant bande de roulement (16) et les câblés (20) de carcasse de la portion retroussée (17) étant de 3 degrés ou plus et de 15 degrés ou moins.

2. Pneumatique (1) pour motocyclettes selon la revendication 1, dans lequel
l'angle des câblés (20) de carcasse de la portion retroussée (17) est plus grand que l'angle des câblés (20) de carcasse de la portion formant corps principal (16).

3. Pneumatique (1) pour motocyclettes selon la revendication 1, dans lequel
l'angle des câblés (20) de carcasse de la portion retroussée (17) est plus petit que l'angle des câblés (20) de carcasse de la portion formant corps principal (16).

4. Pneumatique (1) pour motocyclettes selon l'une quelconque des revendications 1 à 3, dans lequel
aucune autre couche de renforcement de câblés n'est prévue entre une surface extérieure (2s) de la portion formant bande de roulement (2) et la couche de bande (7).

5. Pneumatique (1) pour motocyclettes selon l'une quelconque des revendications 1 à 4, dans lequel
une épaisseur (t2) d'une portion latérale la plus mince (18) qui a la plus petite épaisseur de pneumatique dans la portion formant paroi latérale (3) et la portion formant talon (4) est plus petite qu'une épaisseur (t1) de la portion formant bande de roulement (2) au niveau de l'équateur de pneumatique (C).

6. Pneumatique (1) pour motocyclettes selon la revendication 5, dans lequel
l'épaisseur (t2) de la portion latérale la plus mince (18) est de 0,70 fois ou moins l'épaisseur (t1) de la portion formant bande de roulement (2).

7. Pneumatique (1) pour motocyclettes selon la revendication 5 ou 6, dans lequel
une extrémité radialement extérieure de la portion retroussée (17) est positionnée radialement à l'extérieur de la portion latérale la plus mince (18).

8. Pneumatique (1) pour motocyclettes selon l'une quelconque des revendications 1 à 7, dans lequel
une extrémité radialement extérieure de la portion retroussée (17) est positionnée radialement à l'intérieur d'une extrémité extérieure (7o), dans une direction axiale du pneumatique, de la couche de bande (7).

9. Jeu de pneumatique pour motocyclettes incluant les pneumatiques (1) selon l'une quelconque des revendications 1 à 8 sous la forme d'un pneumatique (1) pour une roue avant et d'un pneumatique (1) pour une roue arrière, dans lequel
l'angle des câblés (20) de carcasse de la portion formant corps principal (16) du pneumatique (1) pour une roue avant est plus petit que l'angle des câblés (20) de carcasse de la portion formant corps principal (16) du pneumatique (1) pour une roue arrière.
